# EUROPEAN PATENT APPLICATION

(11) **EP 4 391 548 A1**
(43) Date of publication of application: **26.06.2024**
(21) Application number: 22874557.6
(22) Date of filing: 02.09.2022
(51) Int. Cl.: H04N 21/218

(54) **CLOUD DESKTOP DISPLAY METHOD, TERMINAL, CLOUD DESKTOP SYSTEM, DEVICE, AND READABLE MEDIUM**

(30) Priority: 29.09.2021 CN 202111154797
(71) Applicant: ZTE Corporation, Shenzhen, Guangdong 518057 (CN)
(72) Inventor: SUN, Fahe, Shenzhen, Guangdong 518057 (CN); GUO, Teng, Shenzhen, Guangdong 518057 (CN); CHE, Gangjian, Shenzhen, Guangdong 518057 (CN); XIU, Wenfei, Shenzhen, Guangdong 518057 (CN)
(74) Representative: Canzler & Bergmeier Patentanwälte Partnerschaft mbB
(86) International application number: PCT/CN2022/116778
(87) International publication number: WO 2023/051166

(57) **Abstract**

Provided in the present disclosure is a cloud desktop display method. The method comprises: receiving video data, cloud desktop video playing area information and a cloud desktop picture stream, which are sent by a cloud desktop system; according to the video data, the cloud desktop video playing area information and the cloud desktop picture stream, determining a picture to be rendered; and rendering the picture to be rendered, and displaying a rendered picture. Further provided in the present disclosure are a terminal, a cloud desktop system, an electronic device, and a computer-readable medium.

## Description

### CROSS-REFERENCE TO RELATED APPLICATIONS

This application claims priority to patent application No. 202111154797.7 filed with the CNIPA on September 29, 2021, which is incorporated by reference hereby in its entirety.

### TECHNICAL FIELD

The present disclosure relates to, but is not limited to, the field of video redirection technology.

### BACKGROUND

The playback of video files in a cloud desktop is generally limited by the network bandwidth and a central processing unit (CPU) of the server. If the video files are directly played and rendered in the cloud desktop, it will cause high consumption of the CPU of the server, more occupied network bandwidth, and poor playback experience. Most operators generally adopt a redirection method, in which instead of using a cloud desktop protocol, video data is redirected to a terminal for playback. However, the existing method has poor experience when handling a blocking relationship of a video playback window and a cloud desktop application window, resulting in long delay in dragging, stretching and the like of the video playback window and the cloud desktop application window.

### SUMMARY

The present disclosure provides a cloud desktop display method, a terminal, a cloud desktop system, an electronic device, and a computer-readable medium.

In a first aspect, the present disclosure provides a cloud desktop display method, including: receiving video data, cloud desktop video playback area information and a cloud desktop picture stream sent from a cloud desktop system; determining a picture to be rendered according to the video data, the cloud desktop video playback area information and the cloud desktop picture stream; and rendering the picture to be rendered and displaying the rendered picture.

In another aspect, the present disclosure further provides a cloud desktop display method, including: sending video data, cloud desktop video playback area information and a cloud desktop picture stream to a terminal, so that the terminal determines a picture to be rendered according to the video data, the cloud desktop video playback area information and the cloud desktop picture stream, renders the picture to be rendered and displays the rendered picture.

In yet another aspect, the present disclosure further provides a terminal, including: a receiving module configured to receive video data, cloud desktop video playback area information and a cloud desktop picture stream sent from a cloud desktop system; a processing module configured to determine a picture to be rendered according to the video data, the cloud desktop video playback area information and the cloud desktop picture stream; and a rendering module configured to render the picture to be rendered; and a display module configured to display the rendered picture.

In yet another aspect, the present disclosure further provides a cloud desktop system including: a sending module configured to send video data, cloud desktop video playback area information and a cloud desktop picture stream to a terminal, so that the terminal determines a picture to be rendered according to the video data, the cloud desktop video playback area information and the cloud desktop picture stream, renders the picture to be rendered and displays the rendered picture.

In yet another aspect, the present disclosure further provides an electronic device, including: one or more processors; and a storage device having one or more programs stored thereon; wherein the one or more programs, when executed by the one or more processors, cause the one or more processors to implement any cloud desktop display method as described herein.

In yet another aspect, the present disclosure further provides a computer-readable medium having a computer program stored thereon which, when executed by a processor, causes any cloud desktop display method as described herein to be implemented.

### BRIEF DESCRIPTION OF DRAWINGS

FIG. 1 is a schematic flowchart of a cloud desktop display method at a terminal side according to the present disclosure;
FIG. 2 is a schematic flowchart of determining a picture to be rendered according to video data, cloud desktop video playback area information, and a cloud desktop picture stream according to the present disclosure;
FIG. 3 is a schematic flowchart of determining a video picture stream according to video data, position information of a preset playback area in a cloud desktop, and position information of an available playback area in the cloud desktop according to the present disclosure;
FIG. 4 is a schematic flowchart of determining, according to position information of an available playback area in a cloud desktop, cloud desktop picture data in a cloud desktop picture stream matched with a video picture data in a video picture stream according to the present disclosure;
FIG. 5 is a schematic flowchart of a cloud desktop display method at a terminal side according to the present disclosure;
FIG. 6 is a schematic flowchart of a cloud desktop display method at a cloud desktop system side according to the present disclosure;
FIG. 7 is a schematic flowchart of a cloud desktop display method at a cloud desktop system side according to the present disclosure;
FIG. 8 is a schematic working diagram of cloud desktop display according to the present disclosure;
FIG. 9 is a schematic block diagram of a terminal according to the present disclosure;
FIG. 10 is a schematic block diagram of a cloud desktop system according to the present disclosure;
FIG. 11 is a schematic block diagram of a cloud desktop system according to the present disclosure;
FIG. 12 is a schematic diagram of an electronic device according to the present disclosure; and
FIG. 13 is a schematic diagram of a computer-readable medium according to the present disclosure.

### DETAIL DESCRIPTION OF EMBODIMENTS

Example implementations will be described more sufficiently below with reference to the accompanying drawings, but which may be embodied in different forms and should not be construed as limited to the implementations set forth herein. Rather, these implementations are provided so that the present disclosure will be thorough and complete, and will fully convey the scope of the present disclosure to those skilled in the art.

As used herein, the term "and/or" includes any and all combinations of one or more of the associated listed items.

The terminology used herein is for the purpose of describing specific implementations only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or combinations thereof.

The implementations described herein may be described with reference to plan and/or sectional views in idealized representations of the present disclosure. Accordingly, the example illustrations may be modified in accordance with the manufacturing process and/or the tolerance. Accordingly, the implementations are not limited to the implementations shown in the drawings, but include modifications of configurations formed based on manufacturing processes. Therefore, the regions illustrated in the figures have schematic properties, and the shapes of the regions shown in the figures illustrate specific shapes of regions of elements, but are not intended to be limitative.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

At present, most redirection methods rely on the playback architecture of the cloud desktop system. The playback architecture of the cloud desktop system is modified to achieve the purpose of capturing video data, and the captured audio/video data are sent to a terminal over a network for decoding and rendering, while position information of a preset video playback area in the cloud desktop is sent to the terminal, so that the terminal crops a video playback window to handle a blocking (or overlapping) relationship between the video playback window and an application window in the cloud desktop. However, this method cannot well handle the blocking relationship between the video playback window and the cloud desktop application window, which results in a poor display effect of the cloud desktop. For example, insufficient cropping of the video playback window will cause the cloud desktop application window to be blocked, resulting in difficult operations on the cloud desktop application window.

The implementations of the present disclosure propose that the reason of the above problem is that the terminal may acquire video data as well as a cloud desktop picture stream including the application window picture in the cloud desktop from the cloud desktop system, and the terminal directly renders the cloud desktop picture stream on the one hand and separately renders the video data to display a video playback picture on the other hand, which is in essence equivalent to that the terminal generates a video playback window by itself to play the video rather than play the video in the video playback window in the cloud desktop, and the terminal does not link the video data and the cloud desktop picture stream even when rendering the cloud desktop picture. Therefore, the video data and the cloud desktop picture stream can be fused to obtain a complete cloud desktop picture to be rendered, and only this cloud desktop picture is rendered.

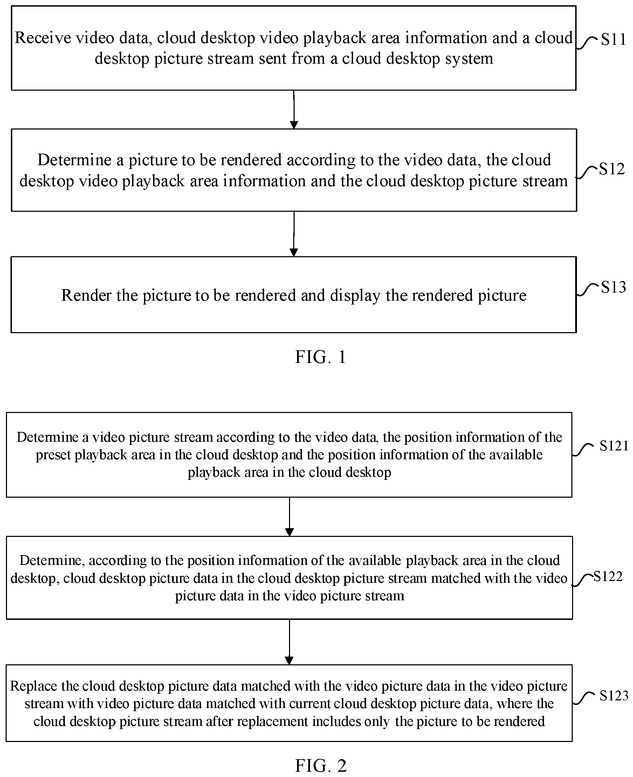

Accordingly, as shown in FIG. 1, in some implementations, the present disclosure provides a cloud desktop display method, which may include the following operations S11 to S13.

At operation S11, video data, cloud desktop video playback area information and a cloud desktop picture stream sent from a cloud desktop system are received.

At operation S12, a picture to be rendered is determined according to the video data, the cloud desktop video playback area information and the cloud desktop picture stream.

At operation S13, the picture to be rendered is rendered and the rendered picture is displayed.

The cloud desktop picture stream is a sequence of cloud desktop pictures to be displayed on the terminal, and the cloud desktop pictures may include various application windows of the cloud desktop.

It should be understood that the video data, the cloud desktop video playback area information, and the cloud desktop picture stream are all received by the terminal from the cloud desktop system, but may be sent from the cloud desktop system simultaneously or non-simultaneously, or may be sent from the cloud desktop system through the same data packet or through different data packets. In operations S12 and S13, the picture to be rendered may be determined, rendered, and displayed after rendering frame by frame, or multiple frames of the picture to be rendered may be determined, rendered, and displayed after rendering according to time sequence information of the picture to be rendered, or multiple frames of the picture to be rendered may be determined, the picture to be rendered may be rendered frame by frame, and then the rendered picture may be displayed, which is not specifically limited in the implementations of the present disclosure in any manner.

As can be seen from the operations S11 to S13, in the cloud desktop display method provided in the implementations of the present disclosure, after the terminal receives the video data, the cloud desktop video playback area information and the cloud desktop picture stream sent from the cloud desktop system, the video data and the cloud desktop picture stream are fused to obtain the picture to be rendered in combination with processing of the cloud desktop video playback area information, and instead of rendering the cloud desktop picture stream and the video picture separately, only the picture to be rendered is rendered and displayed after rendering, so that the blocking relationship between the video playback window and the application window in the cloud desktop can be well handled, and the display effect of the cloud desktop is greatly improved.

To prevent the video playback window displayed on the terminal from blocking the cloud desktop application window, the video playback window may be displayed in an area of the cloud desktop not blocked by the cloud desktop application window. Generally, while sending the video data to the terminal, the cloud desktop system further sends position information of a preset video playback area in the cloud desktop. The implementations of the present disclosure propose that the cloud desktop system may further send position information of an available playback area in the cloud desktop to the terminal, where the available playback area in the cloud desktop is an area not blocked by the cloud desktop application window in the preset playback area in the cloud desktop, and according to the video data, the position information of the preset playback area in the cloud desktop and the position information of the available playback area in the cloud desktop, the terminal can extract a video picture stream having a playback size matched with the size of the available playback area in the cloud desktop. However, if the video picture stream is directly rendered, it is still not ensured that the video playback window on the terminal is right located in the available playback area in the cloud desktop. Therefore, the terminal may further replace a part of the cloud desktop picture data, which corresponds to the available playback area in the cloud desktop, in the cloud desktop picture with the video picture data, so as to obtain a complete picture to be rendered which is directly rendered and displayed after rendering.

Accordingly, in some implementations, the cloud desktop video playback area information includes position information of a preset playback area in the cloud desktop, and position information of an available playback area in the cloud desktop. As shown in FIG.2, determining the picture to be rendered according to the video data, the cloud desktop video playback area information and the cloud desktop picture stream (i.e., operation S12) may include the following operations S121 to S123.

At operation S121, a video picture stream is determined according to the video data, the position information of the preset playback area in the cloud desktop and the position information of the available playback area in the cloud desktop.

At operation S 122, it is determined, according to the position information of the available playback area in the cloud desktop, cloud desktop picture data in the cloud desktop picture stream matched with the video picture data in the video picture stream.

At operation S123, the cloud desktop picture data matched with the video picture data in the video picture stream is replaced with video picture data matched with current cloud desktop picture data, where the cloud desktop picture stream after replacement includes only the picture to be rendered.

The available playback area in the cloud desktop is an area not blocked by the cloud desktop application window in the preset playback area in the cloud desktop, the position information may include position coordinates, the video picture stream is a sequence of video pictures, each video picture has a playback size matched with the size of the available playback area in the cloud desktop, the cloud desktop picture stream is a sequence of cloud desktop pictures to be displayed on the terminal, and both the cloud desktop picture and the video picture can be represented by picture data. The cloud desktop picture stream and the video picture stream both include multiple frames of pictures, and the cloud desktop picture and the video picture typically carry predetermined display time points, resulting in multiple groups of matched video picture data and cloud desktop picture data, where each group of matched video picture data and cloud desktop picture data corresponds to the available playback area in the cloud desktop and the same display time point.

As can be seen from the above operations S121 to S123, in the cloud desktop display method provided in the implementations of the present disclosure, according to the video data, the position information of the preset playback area in the cloud desktop and the position information of the available playback area in the cloud desktop, a video picture stream having a playback size matched with the size of the available playback area in the cloud desktop is firstly extracted, then according to the position information of the available playback area in the cloud desktop, cloud desktop picture data in the cloud desktop picture stream matched with the video picture data in the video picture stream is determined and replace with video picture data matched with current cloud desktop picture data. As a result, the cloud desktop picture data corresponding to the available playback area in the cloud desktop is replaced with the video picture data, and instead of rendering the cloud desktop picture stream and the video picture separately, only the final picture to be rendered is rendered and displayed after rendering, so that the blocking relationship between the application window in the cloud desktop and the video playback window can be well handled, and the display effect of the cloud desktop is greatly improved.

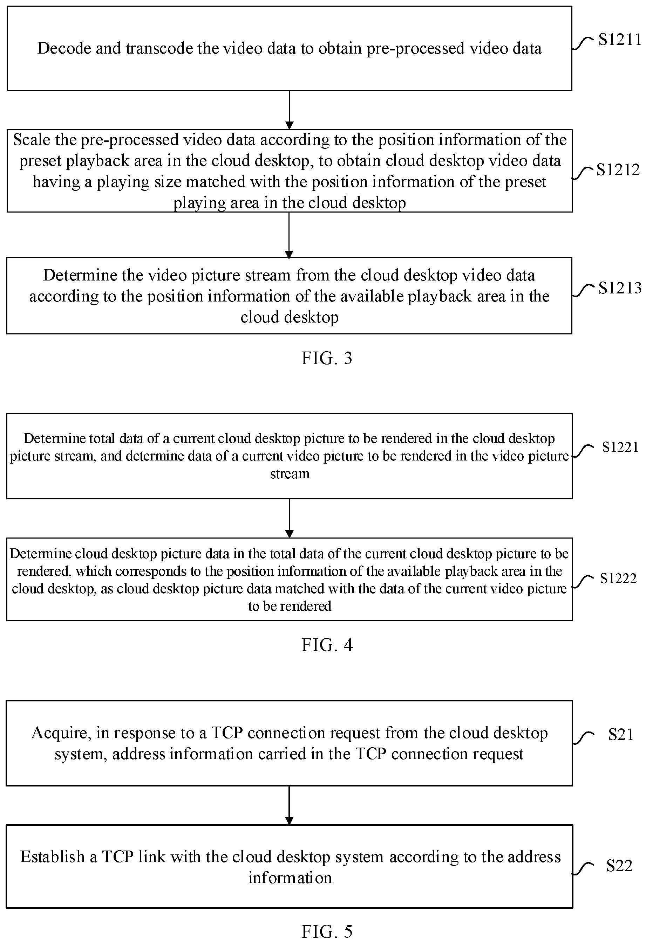

In some implementations, as shown in FIG. 3, determining the video picture stream according to the video data, the position information of the preset playback area in the cloud desktop and the position information of the available playback area in the cloud desktop (i.e., operation S121) may include the following operations S1211 to S1213.

At operation S1211, the video data is decoded and transcoded to obtain pre-processed video data.

At operation S1212, the pre-processed video data is scaled according to the position information of the preset playback area in the cloud desktop, to obtain cloud desktop video data having a playback size matched with the position information of the preset playback area in the cloud desktop.

At operation S1213, the video picture stream is determined from the cloud desktop video data according to the position information of the available playback area in the cloud desktop.

The video data typically carries playback parameters including a predetermined display time point, a playback size and the like, and after decoding and transcoding of the video data, the playback parameters remain unchanged so that the cloud desktop picture stream also carries these playback parameters. Scaling the pre-processed video data refers to scaling a playback size of the pre-processed video data, which includes firstly making a playback size of the video data matched with position information of a preset playback area in the cloud desktop, to obtain cloud desktop video data, and determining, from the cloud desktop video data, part of the video data corresponding to the available playback area in the cloud desktop, i.e., the final video picture stream.

As can be seen from the above operations S1211 to S1213, in the cloud desktop display method provided in the implementations of the present disclosure, the video data is firstly pre-processed, i.e., decoding and transcoding the video data to obtain pre-processed video data, then the pre-processed video data is scaled according to the position information of the preset playback area in the cloud desktop, to make a playback size of the video data matched with position information of the preset playback area in the cloud desktop, and then a video picture stream corresponding to the available playback area in the cloud desktop is extracted from the cloud desktop video data based on the position information of the available playback area in the cloud desktop. Since the video picture stream has a playback size matched with the available playback area in the cloud desktop, i.e., the video playback window has a playback size matched with the size of the available playback area in the cloud desktop, the situation where the video playback window blocks the application window in the cloud desktop due to a larger size of the video playback window than the available playback area in the cloud desktop can be avoided, and the display effect of the cloud desktop is preliminarily improved.

The cloud desktop picture stream and the video picture stream both include multiple frames of pictures represented by picture data, and the cloud desktop picture and the video picture typically carry predetermined display time points, so that only one frame of the cloud desktop picture and one frame of the video picture are displayed at the same absolute time point. Therefore, the terminal can determine total data of a current cloud desktop picture to be rendered from the cloud desktop picture stream, and determine data of a current video picture to be rendered from the video picture stream, and then data of the picture in the available playback area of the cloud desktop is selected out of the total data of the current cloud desktop picture to be rendered, and used as cloud desktop picture data matched with the data of the current video picture to be rendered. Finally, each group of matched video picture data and cloud desktop picture data corresponds to the available playback area in the cloud desktop and the same display time point.

Accordingly, in some implementations, as shown in FIG. 4, determining, according to the position information of the available playback area in the cloud desktop, the cloud desktop picture data in the cloud desktop picture stream matched with the video picture data in the video picture stream (i.e., operation S122) may include the following operations S 1221 and S 1222.

At operation S1221, total data of a current cloud desktop picture to be rendered in the cloud desktop picture stream is determined, and data of a current video picture to be rendered in the video picture stream is determined.

At operation S 1222, cloud desktop picture data in the total data of the current cloud desktop picture to be rendered, which corresponds to the position information of the available playback area in the cloud desktop, is determined as cloud desktop picture data matched with the data of the current video picture to be rendered.

In the implementations of the present disclosure, how to determine the total data of the current cloud desktop picture to be rendered from the cloud desktop picture stream, and how to determine the data of the current video picture to be rendered from the video picture stream are not limited. Because, as described above, the terminal may render the pictures in advance, and then display the rendered pictures when the predetermined display time points are reached, or render the pictures and display the rendered pictures one by one, then correspondingly, the terminal may determine the total data of the current cloud desktop picture to be rendered from the cloud desktop picture stream, and determine the data of the current video picture to be rendered from the video picture stream according to the predetermined display time points corresponding to the picture data, or determine the total data of the current cloud desktop picture to be rendered from the cloud desktop picture stream according to the ordering of the total data of the cloud desktop pictures in the cloud desktop picture stream, and determine the data of the current video picture to be rendered from the video picture stream according to the ordering of the video picture data in the video picture stream. In addition, the cloud desktop system may further send an operation instruction, such as fast forward or fast backward, to the terminal, and the terminal determines the data of the current video picture to be rendered from the video picture stream according to a target time point of the operation instruction sent from the cloud desktop system.

Accordingly, in some implementations, determining data of the current video picture to be rendered in the video picture stream (i.e., operation S1221) may include: determining data of the current video picture to be rendered in the video picture stream according to an operation instruction message sent from the cloud desktop system, where the operation instruction message includes a fast forward instruction and a fast forward target time point, or includes a fast backward instruction and a fast backward target time point.

The operation instruction message may further include a pause instruction, and when the pause instruction is received, the terminal stops displaying the rendered picture.

In an implementation of the present disclosure, the cloud desktop system may further update the position information of the available playback area in the cloud desktop in real time. When the available playback area in the cloud desktop is changed, the cloud desktop system may send the updated position information of the available playback area in the cloud desktop to the terminal. When the position information of the available playback area in the cloud desktop is updated, the cloud desktop video playback area information is also updated, and the terminal may determine a new picture to be rendered according to the video data, the updated cloud desktop video playback area information and the cloud desktop picture stream.

The terminal caches last frame data in the cloud desktop video data all the time, and upon receiving updated position information of the available playback area in the cloud desktop after pausing playback of a rendered picture, the terminal may, according to the updated position information of the available playback area in the cloud desktop, extract video picture data corresponding to the updated available playback area in the cloud desktop from the last frame data, and upon receiving a playback instruction again, the terminal replaces the cloud desktop picture data in the total data of the current cloud desktop picture to be rendered, which corresponds to the updated position information of the available playback area in the cloud desktop, with the video picture data to obtain the picture to be rendered.

Currently, the cloud desktop system typically adopts a windows system in which a DirectShow-based player can intercept undecoded video data from a filter in the DirectShow and then send the video data to the terminal. With the continuous development of the cloud desktop technology, the cloud desktop system is more and more prone to developing a domestic operating system based on a Linux kernel, and therefore, how to acquire video data and send the video data to a terminal independent of the DirectShow of windows has become an urgent problem to be solved.

In view of this, an implementation of the present disclosure proposes that by establishing an out-of-band transmission control protocol (TCP) link between the cloud desktop system and the terminal, the cloud desktop system can send data such as video data, cloud desktop video playback area information, and a cloud desktop picture stream to the terminal through the out-of-band TCP link independent of the DirectShow-based player in the windows system acquiring and sending video data to the terminal, thereby implementing cross-platform application of the cloud desktop system.

Accordingly, in some implementations, before receiving the video data, the cloud desktop video playback area information and the cloud desktop picture stream sent from the cloud desktop system (i.e., operation S11), as shown in FIG. 5, the method may further include the following operations S21 and S22.

At operation S21, in response to a TCP connection request from the cloud desktop system, address information carried in the TCP connection request is acquired.

At operation S22, a TCP link is established with the cloud desktop system according to the address information.

Accordingly, receiving the video data, the cloud desktop video playback area information and the cloud desktop picture stream sent from the cloud desktop system (i.e., operation S11) may include: receiving video data, cloud desktop video playback area information and a cloud desktop picture stream sent from a cloud desktop system through the TCP link.

The TCP connection request is sent from the cloud desktop system after receiving the video playback instruction, and the address information is a TCP service address and a port.

As can be seen from the above operations S21 to S22, in the cloud desktop display method provided in the implementations of the present disclosure, after receiving the video playback instruction, the cloud desktop system sends a TCP connection request carrying a TCP service address and a port to the terminal, and the terminal establishes a TCP link with the cloud desktop system according to the address information. In this manner, the cloud desktop system can send the video data, the cloud desktop video playback area information and the cloud desktop picture stream to the terminal through the TCP link, and the terminal can receive the video data, the cloud desktop video playback area information and the cloud desktop picture stream sent from the cloud desktop system through the TCP link, so that video data can be acquired and sent to the terminal independent of the DirectShow frame in the windows system. In other words, when a domestic operating system is developed based on a Linux kernel in the cloud desktop system, video data can be acquired and sent to the terminal to play a cloud desktop video on the terminal, thereby implementing cross-platform application of the cloud desktop system.

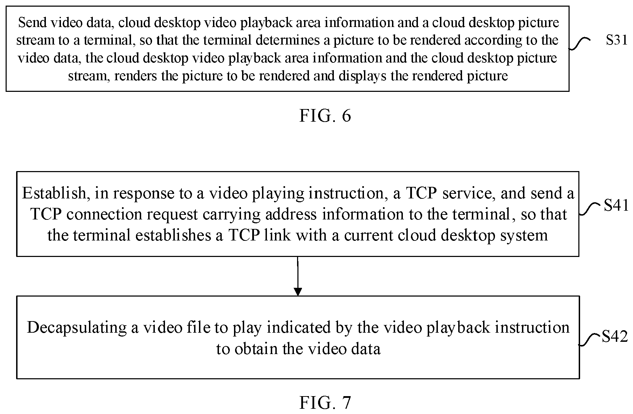

As shown in FIG. 6, in some implementations, the present disclosure further provides a cloud desktop display method, which may include the following operation S31.

At operation S31, video data, cloud desktop video playback area information and a cloud desktop picture stream are sent to a terminal, so that the terminal determines a picture to be rendered according to the video data, the cloud desktop video playback area information and the cloud desktop picture stream, renders the picture to be rendered and displays the rendered picture.

The cloud desktop system sends video data, cloud desktop video playback area information and a cloud desktop picture stream to a terminal, the terminal fuses the video data and the cloud desktop picture stream to obtain the picture to be rendered in combination with processing of the cloud desktop video playback area information, and instead of rendering the cloud desktop picture stream and the video picture separately, only the picture to be rendered is rendered and displayed after rendering, so that the blocking relationship between the video playback window and the application window in the cloud desktop can be well handled, and the display effect of the cloud desktop is greatly improved.

In some implementations, the cloud desktop video playback area information includes position information of a preset playback area in the cloud desktop, and position information of an available playback area in the cloud desktop.

In some implementations, as shown in FIG. 7, before sending the video data, the cloud desktop video playback area information and the cloud desktop picture stream to the terminal (operation S31), the method may further include the following operations S41 and S42.

At operation S41, in response to a video playback instruction, a TCP service is established and a TCP connection request carrying address information is sent to the terminal, so that the terminal establishes a TCP link with a current cloud desktop system.

At operation S42, a video file to play indicated by the video playback instruction is decapsulated to obtain the video data.

Accordingly, sending the video data, the cloud desktop video playback area information and the cloud desktop picture stream to the terminal (operation S31) may include: sending video data, cloud desktop video playback area information and a cloud desktop picture stream to a terminal through the TCP link.

The cloud desktop system may include a desktop agent VDagent and a virtual machine player VMPlayer, and the terminal may include an out-of-band module. Upon receiving a video playback instruction, the VMPlayer establishes a TCP service and sends a TCP service address and a port to the VDagent, and the VDagent sends a TCP connection request carrying the TCP service address and the port to the out-of-band module of the terminal. The out-of-band module establishes a TCP connection with the TCP service of the VMPlayer according to the TCP service address and the port. After establishing the TCP link, the VMPlayer decapsulates a video file to obtain video data, and sends the video data and cloud desktop video playback area information to the out-of-band module of the terminal through the TCP link.

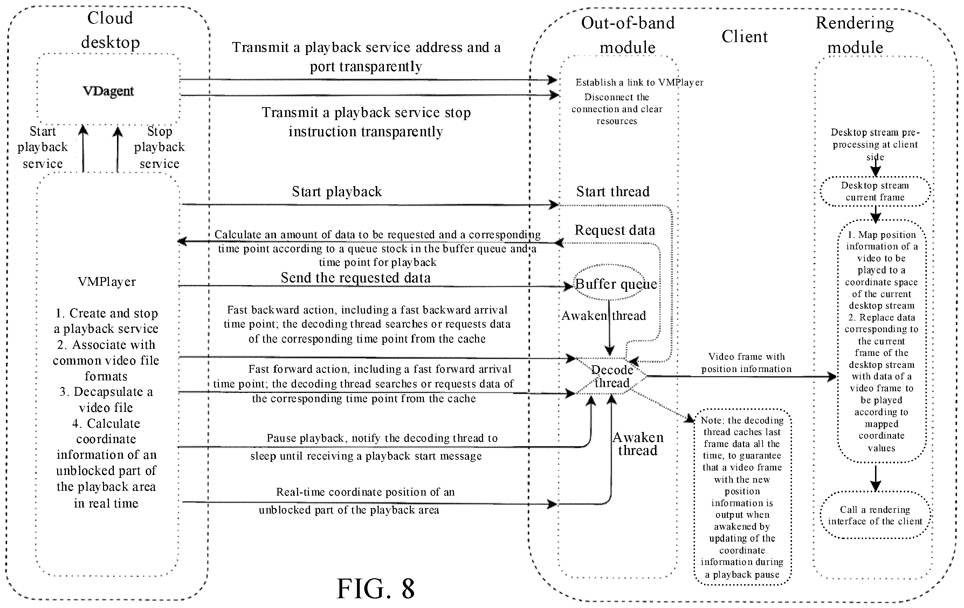

As shown in FIG. 8, an implementation of the present disclosure provides a working diagram of a cloud desktop display, where the cloud desktop system may include a desktop agent VDagent and a virtual machine player VMPlayer (other necessary modules are omitted in the drawing), and a client, i.e., the terminal, may include an out-of-band module and a rendering module (other necessary modules are omitted in the drawing). The VDagent may transmit a playback service address and a port (i.e., the TCP service address and the port) and a playback service stop instruction to the out-of-band module in a transparent manner, and the out-of-band module may establish a link to the VMPlayer (i.e., establishing a TCP connection with the TCP service of the VMPlayer), and may also disconnect the connection and/or clear resources. The working contents of the VMPlayer mainly include: 1. creating and stopping a playback service; 2. associating with common video file formats; and 3. calculating coordinate information (i.e., position information of an available playback area in the cloud desktop) of an unblocked part of the playback area in real time. The VMPlayer may instruct the VDagent to start or stop a playback service. The out-of-band module further includes a buffer queue, a decoding thread and the like, and the VMPlayer may send a playback start message to the out-of-band module to trigger the out-of-band module to start the decoding thread. The out-of-band module may calculate an amount of data to be requested and a corresponding time point according to a queue stock in the buffer queue and a time point for playback, and send a request to the VMPlayer, and the VMPlayer may send, in response to the request, the data requested by the VMPlayer to the out-of-band module. The VMPlayer may further send to the out-of-band module a fast forward action instruction including a fast forward arrival time point (i.e., fast forward target time) or a fast backward action instruction including a fast backward arrival time point (i.e., fast backward target time), and the decoding thread of the out-of-band module searches or requests data of the corresponding time point from the cache. The VMPlayer may further send a playback pause instruction to the out-of-band module to notify the decoding thread of the out-of-band module to sleep until receiving a playback start message sent from the VMPlayer. The VMPlayer may further send a real-time coordinate position of the unblocked part of the video playback area to the out-of-band module, to awaken the decoding thread. Last frame data in the cloud desktop video data is stored in the buffer queue of the out-of-band module all the time, so as to guarantee that a video frame with new position information is output to the rendering module when the out-of-band module is awakened by updating of the coordinate information (i.e., the real-time coordinate position of the unblocked part of the video playback area sent from the out-of-band module) at a time point of playback pause. The out-of-band module outputs the video frame with the position information to the rendering module, and the rendering module performs pre-processing on a desktop of a client, that is, determines a current frame of the desktop stream (i.e., total data of a current cloud desktop picture to be rendered in the cloud desktop picture stream), maps position information of a video to be played to a coordinate space of the current desktop stream, replaces picture data corresponding to the current frame of the desktop stream with picture data of a video frame to be played according to mapped coordinate values, and finally calls a rendering interface of the client to render the picture data after the replacement.

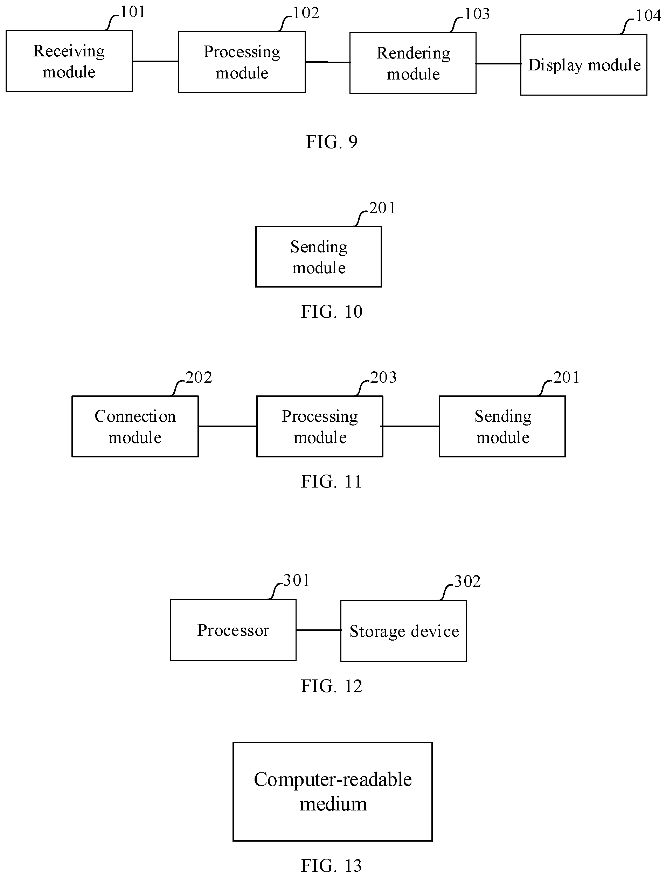

Based on the same technical concept, as shown in FIG. 9, in some implementations, the present disclosure further provides a terminal, which may include: a receiving module 101, a processing module 102, a rendering module 103, and a display module 104.

The receiving module 101 is configured to receive video data, cloud desktop video playback area information and a cloud desktop picture stream sent from a cloud desktop system.

The processing module 102 is configured to determine a picture to be rendered according to the video data, the cloud desktop video playback area information and the cloud desktop picture stream.

The rendering module 103 is configured to render the picture to be rendered.

The display module 104 is configured to display the rendered picture.

In some implementations, the cloud desktop video playback area information includes position information of a preset playback area in the cloud desktop, and position information of an available playback area in the cloud desktop; and the processing module 102 is configured to: determine a video picture stream according to the video data, the position information of the preset playback area in the cloud desktop and the position information of the available playback area in the cloud desktop; determine, according to the position information of the available playback area in the cloud desktop, cloud desktop picture data in the cloud desktop picture stream matched with the video picture data in the video picture stream; and replace the cloud desktop picture data matched with the video picture data in the video picture stream with video picture data matched with current cloud desktop picture data, where the cloud desktop picture stream after replacement includes only the picture to be rendered.

In some implementations, the processing module 102 is configured to: decode and transcode the video data to obtain pre-processed video data; scale the pre-processed video data according to the position information of the preset playback area in the cloud desktop, to obtain cloud desktop video data having a playback size matched with the position information of the preset playback area in the cloud desktop; and determine the video picture stream from the cloud desktop video data according to the position information of the available playback area in the cloud desktop.

In some implementations, the processing module 102 is configured to: determine total data of a current cloud desktop picture to be rendered in the cloud desktop picture stream, and determine data of a current video picture to be rendered in the video picture stream; and determine cloud desktop picture data in the total data of the current cloud desktop picture to be rendered, which corresponds to the position information of the available playback area in the cloud desktop, as cloud desktop picture data matched with the data of the current video picture to be rendered.

In some implementations, the processing module 102 is configured to: determine data of the current video picture to be rendered in the video picture stream according to an operation instruction message sent from the cloud desktop system, where the operation instruction message includes a fast forward instruction and a fast forward target time point, or includes a fast backward instruction and a fast backward target time point.

In some implementations, the receiving module 101 is further configured to: acquire, in response to a TCP connection request from the cloud desktop system, address information carried in the TCP connection request; and configured to receive video data, cloud desktop video playback area information and a cloud desktop picture stream sent from the cloud desktop system through the TCP link.

The processing module is further configured to: establish a TCP link with the cloud desktop system according to the address information.

Based on the same technical concept, as shown in FIG. 10, in some implementations, the present disclosure further provides a cloud desktop system, which may include: a sending module 201 configured to send video data, cloud desktop video playback area information and a cloud desktop picture stream to a terminal, so that the terminal determines a picture to be rendered according to the video data, the cloud desktop video playback area information and the cloud desktop picture stream, renders the picture to be rendered and displays the rendered picture.

In some implementations, the cloud desktop video playback area information includes position information of a preset playback area in the cloud desktop, and position information of an available playback area in the cloud desktop.

In some implementations, as shown in FIG. 11, the cloud desktop system further includes: a connection module 202 configured to establish a TCP service in response to a video playback instruction; and a processing module 203 configured to decapsulate a video file to play indicated by the video playback instruction to obtain the video data. The sending module 201 is further configured to: send a TCP connection request carrying address information to the terminal, so that the terminal establishes a TCP link with the current cloud desktop system; and configured to send video data, cloud desktop video playback area information and a cloud desktop picture stream to the terminal through the TCP link.

Furthermore, as shown in FIG. 12, in some implementations, the present disclosure further provides an electronic device, including: one or more processors 301; and a storage device 302 having one or more programs stored thereon; wherein the one or more programs, when executed by the one or more processors 301, cause the one or more processors 301 to perform the cloud desktop display method as described in any of the above implementations.

Furthermore, as shown in FIG. 13, in some implementations, the present disclosure further provides a computer-readable medium having a computer program stored thereon which, when executed by a processor, causes the cloud desktop display method as described in any of the above implementations to be implemented.

Those of ordinary skill in the art will appreciate that all or some operations of the above described method, functional modules/units in the apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer-readable medium (or non-transitory medium) and communication medium (or transitory medium). The term computer-readable medium includes volatile and nonvolatile, removable and non-removable media implemented in any method or technology for storage of information such as computer-readable instructions, data structures, program modules or other data, as is well known to those of ordinary skill in the art. The computer-readable medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disc storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary implementations, and although specific terms are employed, they are used and should be interpreted in a generic and descriptive sense only and not for purposes of limitation. In some instances, as would be apparent to one skilled in the art, features, characteristics and/or elements described in connection with a particular implementation may be used alone or in combination with features, characteristics and/or elements described in connection with another implementation, unless expressly stated otherwise. It will, therefore, be understood by those skilled in the art that various changes in form and details may be made therein without departing from the scope of the present disclosure as set forth in the appended claims.

## Claims

1. A cloud desktop display method, comprising:
receiving video data, cloud desktop video playback area information and a cloud desktop picture stream, which are sent from a cloud desktop system;
determining a picture to be rendered according to the video data, the cloud desktop video playback area information and the cloud desktop picture stream; and
rendering the picture to be rendered and displaying the rendered picture.

2. The method according to claim 1, wherein the cloud desktop video playback area information comprises position information of a preset playback area in the cloud desktop, and position information of an available playback area in the cloud desktop; and determining the picture to be rendered according to the video data, the cloud desktop video playback area information and the cloud desktop picture stream comprises:
determining a video picture stream according to the video data, the position information of the preset playback area in the cloud desktop and the position information of the available playback area in the cloud desktop;
determining, according to the position information of the available playback area in the cloud desktop, cloud desktop picture data in the cloud desktop picture stream matched with video picture data in the video picture stream; and
replacing the cloud desktop picture data matched with the video picture data in the video picture stream with video picture data matched with current cloud desktop picture data, wherein the cloud desktop picture stream after replacement comprises only the picture to be rendered.

3. The method according to claim 2, wherein determining the video picture stream according to the video data, the position information of the preset playback area in the cloud desktop and the position information of the available playback area in the cloud desktop comprises:
decoding and transcoding the video data to obtain pre-processed video data;
scaling the pre-processed video data according to the position information of the preset playback area in the cloud desktop, to obtain cloud desktop video data having a playback size matched with the position information of the preset playback area in the cloud desktop; and
determining the video picture stream from the cloud desktop video data according to the position information of the available playback area in the cloud desktop.

4. The method according to claim 2, wherein determining, according to the position information of the available playback area in the cloud desktop, the cloud desktop picture data in the cloud desktop picture stream matched with the video picture data in the video picture stream comprises:
determining total data of a current cloud desktop picture to be rendered in the cloud desktop picture stream, and determining data of a current video picture to be rendered in the video picture stream; and
determining cloud desktop picture data in the total data of the current cloud desktop picture to be rendered, which corresponds to the position information of the available playback area in the cloud desktop, as cloud desktop picture data matched with the data of the current video picture to be rendered.

5. The method according to claim 4, wherein determining the data of the current video picture to be rendered in the video picture stream comprises:
determining the data of the current video picture to be rendered in the video picture stream according to an operation instruction message sent from the cloud desktop system, wherein the operation instruction message comprises a fast forward instruction and a fast forward target time point, or comprises a fast backward instruction and a fast backward target time point.

6. The method according to any one of claims 1 to 5, wherein before receiving the video data, the cloud desktop video playback area information and the cloud desktop picture stream sent from the cloud desktop system, the method further comprises:
acquiring, in response to a transmission control protocol (TCP) connection request from the cloud desktop system, address information carried in the TCP connection request; and
establishing a TCP link with the cloud desktop system according to the address information; and
receiving the video data, the cloud desktop video playback area information and the cloud desktop picture stream sent from the cloud desktop system comprises: receiving the video data, the cloud desktop video playback area information and the cloud desktop picture stream sent from the cloud desktop system through the TCP link.

7. A cloud desktop display method, comprising:
sending video data, cloud desktop video playback area information and a cloud desktop picture stream to a terminal, so that the terminal determines a picture to be rendered according to the video data, the cloud desktop video playback area information and the cloud desktop picture stream, renders the picture to be rendered and displays the rendered picture.

8. The method according to claim 7, wherein the cloud desktop video playback area information comprises position information of a preset playback area in the cloud desktop, and position information of an available playback area in the cloud desktop.

9. The method according to claim 7, wherein before sending the video data, the cloud desktop video playback area information and the cloud desktop picture stream to the terminal, the method further comprises:
establishing, in response to a video playback instruction, a transmission control protocol (TCP) service, and sending a TCP connection request carrying address information to the terminal, so that the terminal establishes a TCP link with a current cloud desktop system;
decapsulating a video file to play indicated by the video playback instruction to obtain the video data; and
sending the video data, the cloud desktop video playback area information and the cloud desktop picture stream to the terminal comprises: sending the video data, the cloud desktop video playback area information and the cloud desktop picture stream to the terminal through the TCP link.

10. A terminal, comprising:
a receiving module configured to receive video data, cloud desktop video playback area information and a cloud desktop picture stream sent from a cloud desktop system;
a processing module configured to determine a picture to be rendered according to the video data, the cloud desktop video playback area information and the cloud desktop picture stream;
a rendering module configured to render the picture to be rendered; and
a display module configured to display the rendered picture.

11. A cloud desktop system, comprising:
a sending module configured to send video data, cloud desktop video playback area information and a cloud desktop picture stream to a terminal, so that the terminal determines a picture to be rendered according to the video data, the cloud desktop video playback area information and the cloud desktop picture stream, renders the picture to be rendered and displays the rendered picture.

12. An electronic device, comprising:
one or more processors; and
a storage device having one or more programs stored thereon; wherein
the one or more programs, when executed by the one or more processors, cause the one or more processors to implement any one of
the cloud desktop display method according to any of claims 1 to 6; or
the cloud desktop display method according to any of claims 7 to 9.

13. A computer-readable medium storing a computer program thereon which, when executed, causes any one of:
the cloud desktop display method according to any of claims 1 to 6; or
the cloud desktop display method according to any of claims 7 to 9, to be implemented.
